# EUROPEAN PATENT APPLICATION

(11) **EP 4 752 838 A1**
(43) Date of publication of application: **03.06.2026**
(21) Application number: 25195619.9
(22) Date of filing: 13.08.2025
(51) Int. Cl.: G06T 11/26

(54) **GRAPHICS DRAWING METHOD, STORAGE MEDIUM, ELECTRONIC DEVICE AND COMPUTER PROGRAM PRODUCT**

(30) Priority: 28.11.2024 JP 2024206983; 20.01.2025 CN 202510092729
(71) Applicant: SHANGHAI TOSUN TECHNOLOGY LTD, Shanghai 201804 (CN)
(72) Inventor: Liu, Chu, Shanghai (CN); Xie, Yueyin, Shanghai (CN); Mo, Mang, Shanghai (CN)
(74) Representative: Sun, Yanan

(57) **Abstract**

A graphics drawing method includes: dividing a drawing area into at least one individual column of physical pixels according to physical horizontal pixels; for each individual column of physical pixels, selecting corresponding signal data points as a signal ingress point, a signal egress point, a highest point of signal value and a lowest point of signal value from all signal data points for graphics drawing in the individual column of physical pixels; and, configuring the signal ingress point to be connected with a signal egress point in a previous neighboring individual column of physical pixels, and configuring the highest point of signal value to be connected with the lowest point of signal value in the same individual column of physical pixels.

## Description

### CROSS-REFERENCE TO THE RELATED APPLICATIONS

This application is based upon and claims priority to the Chinese Patent Application No. 202510092729.4 filed on January 20, 2025, and the Japanese Patent Application No. 2024-206983 filed on November 28, 2024, the entire contents of which are incorporated herein by reference.

### TECHNICAL FIELD

The present disclosure relates to the technical field of vehicular software development and in particular to a graphics drawing method and system.

### BACKGROUND

In recent years, along with rapid development of computer graphics processing technologies, graphics drawing algorithms play a critical role in various fields.

Especially in the vehicle tool field, along with the popularity of the intelligent vehicles and wide increase of the in-vehicle signal number and collection frequency, the users have increasing requirements for the graphics drawing speed and quality of signals. Especially when visualized analysis of ultra-large dataset or high-resolution graphics rendering is performed, the traditional graphics drawing algorithms are faced up with many challenges. For example, when a current algorithm processes any area scaling request of a user and the collected data points reach a given number, if all the data points are displayed in a same drawing area, the graphics details will be lost, for example, the peak value and valley value cannot be displayed, thereby affecting the interaction and understanding of the user on the graphics data.

### SUMMARY

The present disclosure relates to a graphics drawing method and system, a storage medium, an electronic device, and a computer program product. The graphics drawing method includes: dividing a drawing area into at least one individual column of physical pixels according to physical horizontal pixels; for each individual column of physical pixels, selecting corresponding signal data points as a signal ingress point, a signal egress point, a highest point of signal value and a lowest point of signal value from all signal data points for graphics drawing in the individual column of physical pixels; and, configuring the signal ingress point to be connected with a signal egress point in a previous neighboring individual column of physical pixels, and configuring the highest point of signal value to be connected with the lowest point of signal value in the same individual column of physical pixels.

Additional features and advantages of the present disclosure will be described in the following specification, and some of these will become apparent from the specification or be understood through the practice of the present disclosure. The objectives and other advantages of the present disclosure are achieved and obtained through the structures specifically outlined in the specification, claims, and accompanying drawings.

To make the above objects, features, and advantages of the present disclosure clearer and more understandable, the present disclosure will be described in detail below with reference to the preferred embodiments and accompanying drawings.

### BRIEF DESCRIPTION OF THE DRAWINGS

In order to more clearly describe the technical solutions in the embodiments of the present disclosure or in the prior arts, the drawings required for descriptions of the specific embodiments or the prior arts will be briefly introduced. Apparently, the drawings described hereunder are only some embodiments of the present disclosure. Those skilled in the arts can obtain other drawings based on these drawings without making creative work.
FIG. 1 is a step diagram illustrating a graphics drawing method according to some embodiments of the present disclosure.
FIG. 2 is a schematic diagram illustrating a individual column of physical pixels according to some embodiments of the present disclosure.
FIG. 3 is a schematic diagram illustrating a time span occupied by a individual column of physical pixels according to some embodiments of the present disclosure.
FIG. 4 is a schematic diagram illustrating four levels of extreme intervals constructed in the cases involved in some embodiments of the present disclosure.
FIG. 5 is a schematic diagram illustrating a first circumstance in the cases involved in some embodiments of the present disclosure.
FIG. 6A is a schematic diagram illustrating there is no signal data point between a time *t*1_*lvl*1 and a first time *t*1 in a second circumstance in the cases involved in some embodiments of the present disclosure.
FIG. 6B is a schematic diagram illustrating there are signal data points between the time *t*1_*lvl*1 and the first time *t*1 in the second circumstance in the cases involved in some embodiments of the present disclosure.
FIG. 7A is a schematic diagram illustrating there is no signal data point between a time *t*2_*lvl*2 and a second time *t2* in a third circumstance in the cases involved in some embodiments of the present disclosure.
FIG. 7B is a schematic diagram illustrating there are signal data points between the time *t*2_*lvl*2 and the second time *t2* and there are signal data points between a time *t*2_*lvl*1 and the second time *t*2 in the third circumstance in the cases involved in some embodiments of the present disclosure.
FIG. 7C is a schematic diagram illustrating there are signal data points between the time *t*2_*lvl*2 and the second time *t2* and there is no signal data point between the time *t*2_*lvl*1 and the second time *t*2 in the third circumstance in the cases involved in some embodiments of the present disclosure.
FIG. 8 is a schematic diagram illustrating a fourth circumstance in the cases involved in some embodiments of the present disclosure.
FIG. 9 is a schematic diagram illustrating partial graphics drawn by the graphics drawing method according to some embodiments of the present disclosure.
FIG. 10 is a block diagram illustrating a principle of a system according to some embodiments of the present disclosure.
FIG. 11 is a block diagram illustrating a principle of an electronic device according to some embodiments of the present disclosure.
FIG. 12 is a block diagram illustrating a principle of an electronic device according to some embodiments of the present disclosure.

### DETAILED DESCRIPTION OF THE EMBODIMENTS

In order to make the object, technical solutions and advantages of the embodiments of the present disclosure clearer, the technical solutions of the present disclosure will be fully and clearly described in combination with drawings. Apparently, the embodiments described herein are only some embodiments rather than all embodiments. All other embodiments obtained by those skilled in the art based on these embodiments without making creative work shall fall within the scope of protection of the present disclosure.

The ultra-large-scale signal data point drawing brings an enormous challenge to the drawing programs. The common graphics drawing programs usually focus on some aspects while neglecting others. For example, the programs focus on drawing speed without graphics accuracy and cannot display occasional signal spikes in the graphics, or focus on the drawing accuracy without ensuring real-time graphics drawing.

Therefore, at least one embodiment provides a graphics drawing method, which includes: dividing a drawing area into at least one individual column of physical pixels according to physical horizontal pixels;

for each individual column of physical pixels, selecting corresponding signal data points as a signal ingress point *p_in,* a signal egress point *p*_*out,* a highest point of signal value *p_high* and a lowest point of signal value *p_low* from all signal data points for graphics drawing in the individual column of physical pixels; and,

configuring the signal ingress point *p*_*in* to be connected with a signal egress point *p*_*out* in a previous neighboring individual column of physical pixels, and configuring the highest point of signal value *p*_*high* to be connected with the lowest point of signal value *p*_*low* in the same individual column of physical pixels.

In the graphics drawing method of the present embodiment, corresponding signal data points in the individual column of physical pixels are selected as the signal ingress point *p_in,* the signal egress point *p*_*out,* the highest point of signal value *p*_*high* and the lowest point of signal value *p*_*low,* and the four key signal data points can retain the details of the drawn graphics, ensuring the accuracy of the drawn graphics. Furthermore, in the graphics drawing method of the present embodiment, the highest point of signal value *p_high* and the lowest point of signal value *p*_*low* can be quickly selected in real time, which ensures the graphics drawing speed and solves the ultra-large-scale graphics display and analysis pressure in the signals and sensor data collection in the vehicle field.

Some embodiments of the present disclosure will be detailed below in combination with drawings. In case of no conflict, the following embodiments and the features therein can be mutually combined.

It should be noted that like numerals and letters in the following drawings refer to like items. Therefore, once an item is defined in one drawing, it will not be further defined and explained in the following drawings.

Various non-limiting examples of the embodiments of the present disclosure will be detailed below in combination with the drawings.

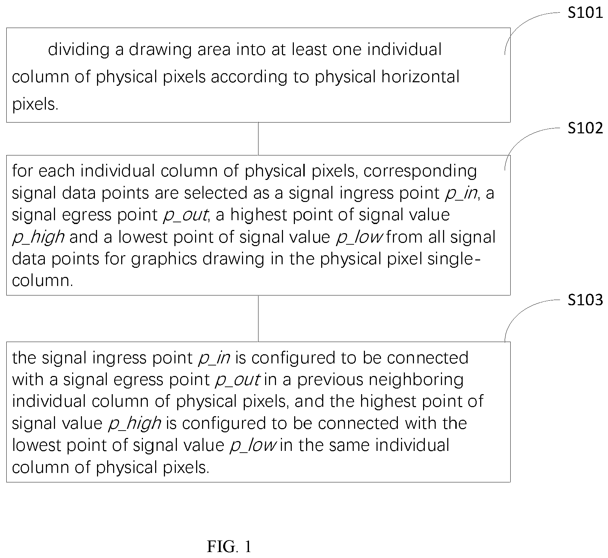

As shown in FIG. 1, some embodiments provide a graphics drawing method, which includes the following steps:

At step S101, a drawing area is divided into at least one individual column of physical pixels according to physical horizontal pixels.

At step S102, for each individual column of physical pixels, corresponding signal data points are selected as a signal ingress point *p*_*in,* a signal egress point *p*_*out,* a highest point of signal value *p_high* and a lowest point of signal value *p*_*low* from all signal data points for graphics drawing in the individual column of physical pixels.

At step S103, the signal ingress point *p*_*in* is configured to be connected with a signal egress point *p*_*out* in a previous neighboring individual column of physical pixels, and the highest point of signal value *p_high* is configured to be connected with the lowest point of signal value *p*_*low* in the same individual column of physical pixels.

Specifically, the signal data points in the embodiment refer to points to be displayed in a two-dimensional plane of a drawing area, where its X-axis coordinate is time and *Y*-axis coordinate is signal value. In the computer graphics and display technologies, physical pixel is a basic concept, which refers to the smallest controllable luminous point or color point on a display device (for example, display, smartphone screen and tablet computer and the like). The physical pixels are basic units forming an image or interface, which are arranged in a horizontal direction and a vertical direction in a two-dimensional plane to form an image that can be seen.

One physical pixel column has only one pixel in the horizontal direction. Therefore, when the graphic is scaled down to enable the physical pixel column to include multiple signal data points, these signal data points share one horizontal coordinate, which means the signal data points in a same physical pixel column will lose a resolution of horizontal direction due to the indivisibility characteristics of the pixels as the smallest display units of the display. At this time, if each signal data point is connected in sequence based on the traditional graphics drawing method, the drawn graphics in the physical pixel column will be equivalent to that the smallest signal data point and the largest signal data point in the physical pixel column are connected simply by a vertical line.

If multiple signal data points are known, the display features of these signal data points in one physical pixel column can be uniquely determined. On the contrary, if the display features of one physical pixel column are known, the number of signal data points in the physical pixel column cannot be determined.

If one individual column of physical pixels does not include any signal data point, the signal egress point *p*_*out* of a previous neighboring individual column of physical pixels of the individual column of physical pixels is connected with the signal ingress point *p*_*in* of a next neighboring individual column of physical pixels of the individual column of physical pixels.

If one individual column of physical pixels includes only one signal data point, the signal data point is the signal ingress point *p_in,* the signal egress point *p*_*out,* the highest point of signal value *p*_*high* and the lowest point of signal value *p*_*low* in the individual column of physical pixels at the same time.

If one individual column of physical pixels includes only two signal data points, one of the two signal data points is the signal ingress point *p*_*in* of the individual column of physical pixels and the other is the signal egress point *p*_*out* of the individual column of physical pixels. Furthermore, one of the two signal data points is also the highest point *p*_*high* of signal value of the individual column of physical pixels and the other is also the lowest point of signal value *p*_*low* of the individual column of physical pixels.

If one individual column of physical pixels includes only three signal data points, two of the three signal data points are the signal ingress point *p*_*in* and the signal egress point *p*_*out* of the individual column of physical pixels respectively; the highest point of signal value *p_high* may be another signal data point or may also be the signal ingress point *p*_*in* or the signal egress point *p*_*out.* Similarly, the lowest point of signal value *p*_*low* may be another signal data point or may also be the signal ingress point *p*_*in* or the signal egress point *p*_*out.*

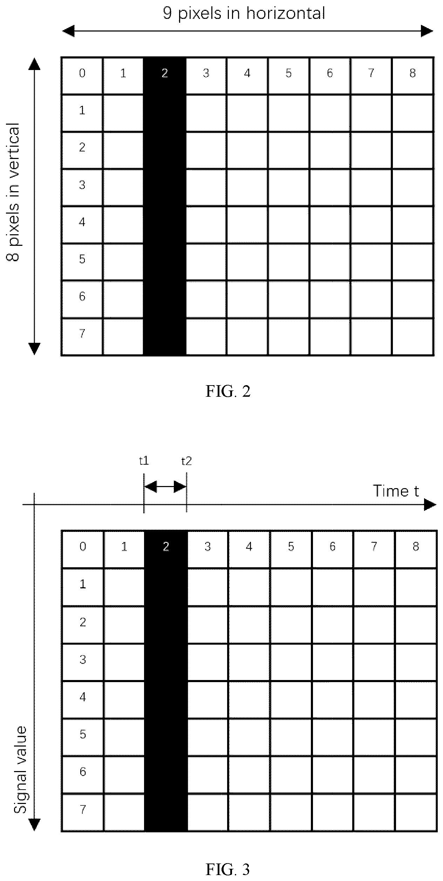

As shown in FIG. 2, if one drawing area occupies 9 pixels of horizontal direction and 8 pixels of vertical direction in a two-dimensional plane, the physical horizontal pixels refer to the physical pixels arranged in the horizontal direction on the two-dimensional plane. If any pixel in the horizontal direction on the topmost end of the drawing area is taken to extend toward the bottom boundary of the drawing area in the vertical direction, one complete column of physical pixels can be obtained as individual column of physical pixels (one complete column of physical pixels with dark color in FIG. 2).

Multiple signal ingress points *p*_*in* are respectively connected with the signal egress points *p*_*out* of the previous neighboring individual column of physical pixels and multiple highest points of signal value *p_high* are respectively connected with the lowest points of signal value in the same individual column of physical pixels, forming graphics finally drawn in the drawing area.

In some embodiments, the method of selecting corresponding signal data points as the highest point of signal value *p*_*high* and the lowest point of signal value *p*_*low* includes:

defining a graphics-displayed time span in each individual column of physical pixels from a first time *t*1 to a second time *t*2;

obtaining a maximum observation value *y*_*high* from all signal data points between the first time *t*1 and the second time *t*2 to take the signal data point corresponding to the maximum observation value *y*_*high* as the highest point of signal value *p*_*high;* and,

obtaining a minimum observation value *y*_*low* from all signal data points between the first time *t*1 and the second time *t*2 to take the signal data point corresponding to the minimum observation value *y*_*low* as the lowest point of signal value *p*_*low.*

Specifically, with the individual column of physical pixels (column numbered 2) in FIG. 3 as an example, a time span occupied by the individual column of physical pixels in the horizontal direction is the first time t1 as minimum and the second time *t*2 as maximum.

In order to obtain in real time the maximum observation value *y*_*high* and the minimum observation value *y*_*low* in all signal data points between the first time *t*1 and the second time *t*2, the observation values of all signal data points between the first time *t*1 and the second time *t*2 are directly traversed in the traditional method to work out the maximum observation value and the minimum observation value. But the calculation time of the method is directly proportional to the number of the signal data points between the first time *t*1 and the second time *t*2, namely, the more the signal data points are, the longer the required calculation time is. When the number of the signal data points is very huge, the calculation time will be extremely long.

Therefore, some embodiments provide a method of more quickly obtaining the minimum observation value *y*_*low* and the maximum observation value *y*_*high* in real time, which includes: constructing the collected signal data points into *n* levels of extreme intervals, wherein *n* is a level number of the extreme interval and *n*≥1; performing downward level-by-level traversal from the highest level-n extreme interval to a level-m extreme interval, such that at least one complete time period in the level-*m* extreme interval is included between the first time *t*1 and the second time *t2,* wherein *m* is a level number of the extreme interval and 1≤*m≤n*, and a number of times of the traversal is *n-m*+1; and, combining the level-*m* extreme interval with the extreme interval dual-side comparison method to obtain the minimum observation value *y*_*low* and the maximum observation value *y_high.*

In some embodiments, the method of constructing the collected signal data points into the *n* levels of extreme intervals includes the followings: all signal data points between the first time *t*1 and the second time *t*2 are divided into multiple time periods based on a preset time span (e.g. 10 milliseconds), and a set to which these time periods belong is constructed into a level-1 extreme interval; along with increase of the number of time periods of the level-1 extreme interval, the time periods included between the first time *t*1 and the second time t2 may also affect the performance of the graphics display over time. At this time, the time periods of the level-1 extreme interval are divided into multiple new time periods based on a greater time span. For example, every 10 time periods of the level-1 extreme interval are used as one new time period so as to create a level-2 extreme interval; similarly, along with increase of the number of the time periods of the level-2 extreme interval, the time periods of the level-2 extreme interval are divided into multiple new time periods based on a new time span. For example, every 10 time periods of the level-2 extreme interval are used as one new time period so as to create a level-3 extreme interval. In this way, a higher level-*n* extreme interval can be continuously created along with increase of the number of the signal data points.

When the signal data points are continuously added to the graphics drawing system in a time sequence, an extreme interval can be constructed in real time. During the construction of the extreme intervals, the maximum observation value and the minimum observation value of the signal data points included in each time period for construction of the level-1 extreme interval are calculated in real time; when the level-2 extreme interval is constructed, the maximum observation value and the minimum observation value of the signal data points included in each time period for construction of the level-2 extreme interval are calculated in real time based on the maximum observation value and the minimum observation value of the signal data points included in the each time period in the level-1 extreme interval. By analogy, when the level-*n* extreme interval is constructed, the maximum observation value and the minimum observation value of the signal data points included in each time period for construction of the level-*n* extreme interval are calculated in real time based on the maximum observation value and the minimum observation value of the signal data points included in the each time period in the level-(*n*-1) extreme interval. That is, during the construction of the extreme intervals, the maximum observation value and the minimum observation value of the signal data points in each time period of each level of extreme interval can be calculated in real time.

In some embodiments, the method of combining the level-m extreme interval with the extreme interval dual-side comparison method to obtain the minimum observation value *y*_*low* and the maximum observation value *y*_*high* includes: defining a time sub-domain of all complete time periods comprised in the level-*m* extreme interval as a time *t*1_*lvlm* to a time *t*2*_lvlm*; determining whether signal data points are present between the time *t*1_*lvlm* and the first time *t*1 and between the time *t*2_*lvlm* and the second time *t2* and obtaining a determination result; and combining with the determination result a minimum value *ym*_*low* and a maximum value *ym*_*high* of all complete time periods included in the level-m extreme interval to obtain the minimum observation value *y*_*low* and the maximum observation value *y*_*high.*

In some embodiments, the method of combining with the determination result the minimum value *ym*_*low* and the maximum value *ym*_*high* of all complete time periods included in the level-m extreme interval to obtain the minimum observation value *y*_*low* and the maximum observation value *y*_*high* includes: if the determination result is that there is no signal data point between the time *t*1_*lvlm* and the first time *t*1 and between the time *t*2_*lvlm* and the second time *t*2, determining the minimum observation value is equal to the minimum value of all complete time periods included in the level-*m* extreme interval, and that the maximum observation value is equal to the maximum value of all complete time periods included in the level-*m* extreme interval.

In some embodiments, the method of combining with the determination result the minimum value *ym*_*low* and the maximum value *ym*_*high* of all complete time periods included in the level-*m* extreme interval to obtain the minimum observation value *y*_*low* and the maximum observation value *y*_*high* includes: if the determination result is that there are signal data points between the time *t*1_*lvlm* and the first time *t*1 and that there is no signal data point between the time *t*2_*lvlm* and the second time *t2,*
at step S11, performing downward level-by-level traversal from a level-(*m*-1) extreme interval to a level-r extreme interval, such that at least one complete time period in the level-r extreme interval is included between the time *t*1_*lvlm* and the first time *t*1, where r is a level number of the extreme interval, 1 ≤ r ≤m - 1, and the number of times of traversal is (m-1)-r+1=m-r times.
at step S12, defining a time sub-domain of all complete time periods included in the level-*r* extreme interval as a time *t*1_*lvlr* to a time *t*1_*lvlm*;
at step S13, determining whether there are signal data points between the time *t*1_*lvlr* and the first time *t*1;
at step *S*14, if the termination result of the step *S*13 is no, determining that the minimum observation value *y*_*low* is equal to a minimum value of the minimum value *ym*_*low* of all complete time periods included in the level-*m* extreme interval and the minimum value *yr*_*low* of all complete time periods included in the level-*r* extreme interval, and that the maximum observation value *y*_*high* is equal to a maximum value of the maximum value *ym*_*high* of all complete time periods included in the level-*m* extreme interval and the maximum value *yr*_*high* of all complete time periods included in the level-*r* extreme interval; if the termination result of the step *S*13 is yes, iterating the step *S*11 to the step *S*13 until the level-1 extreme interval is obtained and determining whether there are signal data points between the time *t*1_*lvl*1 and the first time *t*1;
at step *S*15, if the determination result of determining whether there are signal data points between the time *t*1_*lvl*1 and the first time *t*1 in the step *S*14 is no, determining that the minimum observation value *y*_*low* is equal to a minimum value of the minimum values of all complete time periods included in the extreme intervals of the level-*m* extreme interval to the level-1 extreme interval, and that the maximum observation value *y_high* is equal to a maximum value of the maximum values of all complete time periods included in the extreme intervals of the level-*m* extreme interval to the level-1 extreme interval; if the determination result of determining whether there are signal data points between the time *t*1_*lvl*1 and the first time *t*1 in the step *S*14 is yes, determining that the minimum observation value *y*_*low* is equal to a minimum value of the minimum value of all complete time periods included in the each extreme interval of the level-*m* extreme interval to the level-1 extreme interval and the minimum value of all signal data points between the time *t*1_*lvl*1 and the first time *t*1, and that the maximum observation value *y_high* is equal to a maximum value of the maximum value of all complete time periods included in the each extreme interval of the level-m extreme interval to the level-1 extreme interval and the maximum value of all signal data points between the time *t*1_*lvl*1 and the first time *t*1.

In some embodiments the method of combining with the determination result the minimum value *ym*_*low* and the maximum value *ym*_*high* of all complete time periods included in the level-m extreme interval to obtain the minimum observation value *y*_*low* and the maximum observation value *y*_*high* includes: if the determination result is that there is no signal data point between the time *t*1_*lvlm* and the first time *t*1 and that there are signal data points between the time *t*2_*lvlm* and the second time *t2,*
at step *S*21, performing downward level-by-level traversal from the level-(*m*-1) extreme interval to a level-*j* extreme interval, such that at least one complete time period in the level-*j* extreme interval is included between the time *t*2_*lvlm* and the second time *t2,* where *j* is a level number of the extreme interval, 1 ≤ *j* ≤m - 1, and the number of times of traversal is (m-1)-j+1=m-j times.
at step S22, defining a time sub-domain of all complete time periods included in the level-j extreme interval as the time *t*2_*lvlm* to the time *t2*_*lvlj*;
at step S23, determining whether there are signal data points between the time *t*2_*lvlj* and the second time *t*2;
at step *S*24, if the termination result of the step *S*23 is no, determining that the minimum observation value *y_low* is equal to a minimum value of the minimum value *ym*_*low* of all complete time periods included in the level-*m* extreme interval and the minimum value *yj*_*low* of all complete time periods included in the level-*j* extreme interval, and that the maximum observation value *y*_*high* is equal to a maximum value of the maximum value *ym*_*high* of all complete time periods included in the level-m extreme interval and the maximum value *yj*_*high* of all complete time periods included in the level-*j* extreme interval; if the termination result of the step *S*23 is yes, iterating the step *S*21 to the step *S*23 until the level-1 extreme interval is obtained and determining whether there are signal data points between the time *t*2_*lvl*1 and the second time *t*2;
at step *S*25, if the determination result of determining whether there are signal data points between the time *t*2_*lvl*1 and the second time *t2* in the step *S*24 is no, determining that the minimum observation value *y*_*low* is equal to a minimum value of the minimum values of all complete time periods included in the extreme intervals of the level-*m* extreme interval to the level-1 extreme interval, and that the maximum observation value *y*_*high* is equal to a maximum value of the maximum values of all complete time periods included in the extreme intervals of the level-*m* extreme interval to the level-1 extreme interval; if the determination result of determining whether there are signal data points between the time *t*2_*lvl*1 and the second time *t2* in the step *S*24 is yes, determining that the minimum observation value *y*_*low* is equal to a minimum value of the minimum value of all complete time periods included in the each extreme interval of the level-*m* extreme interval to the level-1 extreme interval and the minimum value of all signal data points between the time *t*2_*lvl*1 and the second time *t2,* and that the maximum observation value *y*_*high* is equal to a maximum value of the maximum value of all complete time periods included in the each extreme interval of the level-*m* extreme interval to the level-1 extreme interval and the maximum value of all signal data points between the time *t*2_*lvl*1 and the second time *t2.*

In some embodiments, the method of combining with the determination result the minimum value *ym*_*low* and the maximum value *ym*_*high* of all complete time periods included in the level-m extreme interval to obtain the minimum observation value *y*_*low* and the maximum observation value *y*_*high* includes: if the determination result is that there are signal data points between the time *t*1_*lvlm* and the first time *t*1 and that there are signal data points between the time *t*2_*lvlm* and the second time *t2,* performing the step *S*11 to the step S15 to obtain one group of minimum observation value and maximum observation value; performing the step *S*21 to the step *S*25 to obtain another group of minimum observation value and maximum observation value; obtaining the smaller value of the two minimum observation values as the final minimum observation value *y*_*low;* and obtaining the greater value of the two maximum observation values as the final maximum observation value *y*_*high.*

The steps of obtaining the minimum observation value *y*_*low* and the maximum observation value *y*_*high* will be detailed below in combination with examples as below.

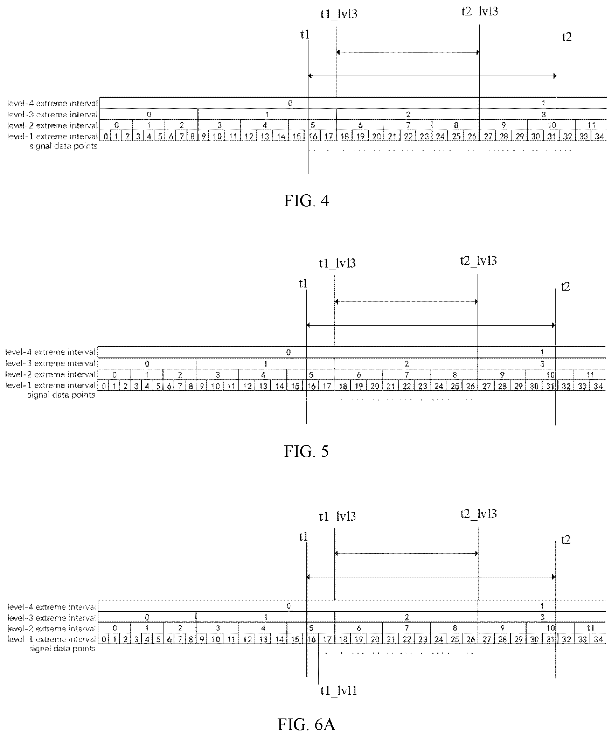

As shown in FIG. 4, it is supposed that four levels of extreme intervals are constructed, where *n*=4. The time span of each time period of the level-1 extreme interval is 10*ms,* and every 3 time periods in the level-1 extreme interval are used as one time period of the level-2 extreme interval; every 3 time periods in the level-2 extreme interval are used as one time period of the level-3 extreme interval; every 3 time periods of the level-3 extreme interval are used as one time period of the level-4 extreme interval. The correspondence of the time period numbers of various levels is as shown in drawing. Furthermore, the 16-numbered time period of the level-1 extreme interval, the 5-numbered time period of the level-2 extreme interval, the 1-numbered time period of the level-3 extreme interval, and the 0-numbered time period of the level-4 extreme interval are truncated by the first time *t*1; the 31-numbered time period of the level-1 extreme interval, the 10-numbered time period of the level-2 extreme interval, the 3-numbered time period of the level-3 extreme interval, and the 1-numbered time period of the level-4 extreme interval are truncated by the second time *t*2; 14 time periods numbered from 17 to 30 in the level-1 extreme interval, 4 time periods numbered from 6 to 9 in the level-2 extreme interval, and 1 time period numbered 2 in the level-3 extreme interval are completely included between the first time *t*1 and the second time *t*2. Therefore, it can be known that when downward level-by-level search is performed from the level-4 extreme interval, at least one complete time period of level-3 extreme interval (the time period corresponding to the number 2 in the level-3 extreme interval) is included between the first time *t*1 and the second time t2, that is *m*=3*.*

The level-4 extreme interval is traversed and it is found that no one complete time period of level-4 extreme interval is included between the first time *t*1 and the second time *t*2; traversal is continued downward from the level-4 extreme interval to the level-3 extreme interval and it is found that one time period *lvl3* of level-3 extreme interval is included between the first time *t*1 and the second time *t*2. The traversal is ended. The number of times of the traversal is 4-3+1=2 times.

The time sub-domain of the time period *lvl3* included in the level-3 extreme interval is defined as a time *t*1_*lvl*3 to a time *t*2_*lvl*3, and the minimum value *y*3_*low* and the maximum value *y*3_*high* in the time period *lvl*3 are obtained, and it is determined whether there are signal data points between the time *t*1_*lvl*3 and the first time *t*1, and between the time *t*2_*lvl*3 and the second time *t*2.

### First circumstance

As shown in FIG. 5, if there is no signal data point between the time *t*1_*lvl*3 and the first time *t*1 and between the time *t*2_*lvl*3 and the second time *t2,* the value of *y*3_*low* is obtained as the minimum observation value *y*_*low* and the value of *y*3_*high* is obtained as the maximum observation value *y_high.*

### Second circumstance

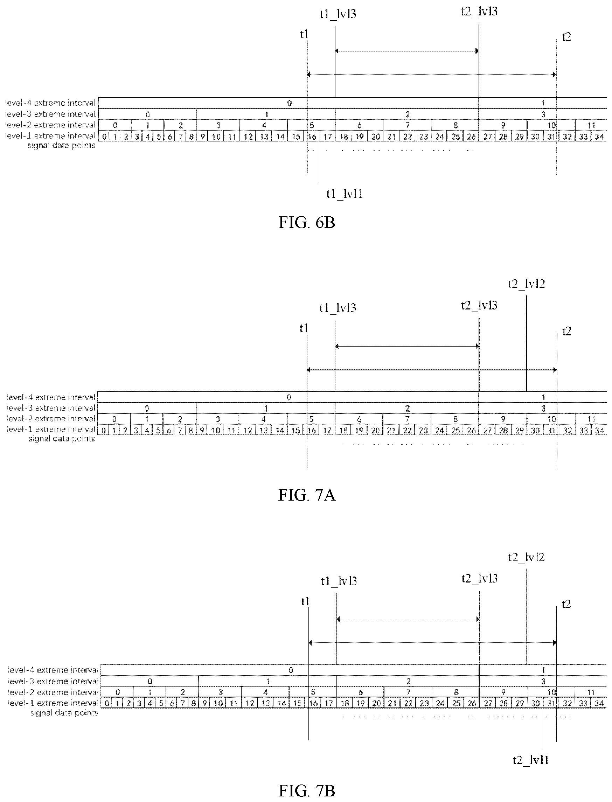

As shown in FIGS. 6A-6B, if there are signal data points between the time *t*1_*lvl*3 and the first time *t*1, and there is no signal data point between the time *t*2_*lvl*3 and the second time *t2,*
at step *S*11, downward traversal is performed from the level-3 extreme interval to the level-2 extreme interval, and it is found that no one complete time period of level-2 extreme interval is included between the time *t*1_*lvl*3 and the first time *t*1; next, downward traversal is performed from the level-2 extreme interval to the level-1 extreme interval, and it is found that one time period *lvl*1 of level-1 extreme interval (the time period corresponding to the number 17 in the level-1 extreme interval) is included between the time *t*1_*lvl*3 and the first time *t*1. Therefore, *r*=1 and the traversal is ended. The number of times of the traversal is 3-1=2 times;
at step S12, the time sub-domain of the time period *lvl*1 is defined as time *t*1_*lvl*1 to time *t*1_*lvl*3, and the minimum value *y*1_*low* and the maximum value *y*1_*high* in the time period *lvl*1 are obtained;
at step *S*13, whether there are signal data points between the time *t*1_*lvl*1 and the first time *t*1 is determined;
at step *S*14, since the level-1 extreme interval has been obtained in the step S11 in the example, there is no need to iterate the steps *S*11 to *S*13 but perform the step S15 directly;
at step *S*15, if the termination result of the step *S*13 is no, as shown in FIG. 6A, the minimum observation value *y*_*low* is the minimum value of *y*3_*low* and *y*1_*low,* and the maximum observation value *y*_*high* is the maximum value of *y*3_*high* and *y*1_*high*; if the determination result of the step S13 is yes, as shown in FIG. 6B, the minimum observation value y_low is the minimum value of *y*3_*low, y*1_*low* and the minimum value of all signal data points between the time *t*1_*lvl*1 and the first time *t*1, and the maximum observation value *y_high* is the maximum value of *y*3_*high, y*1_*high* and the maximum value of all signal data points between the time *t*1_*lvl*1 and the first time *t*1.

### Third circumstance

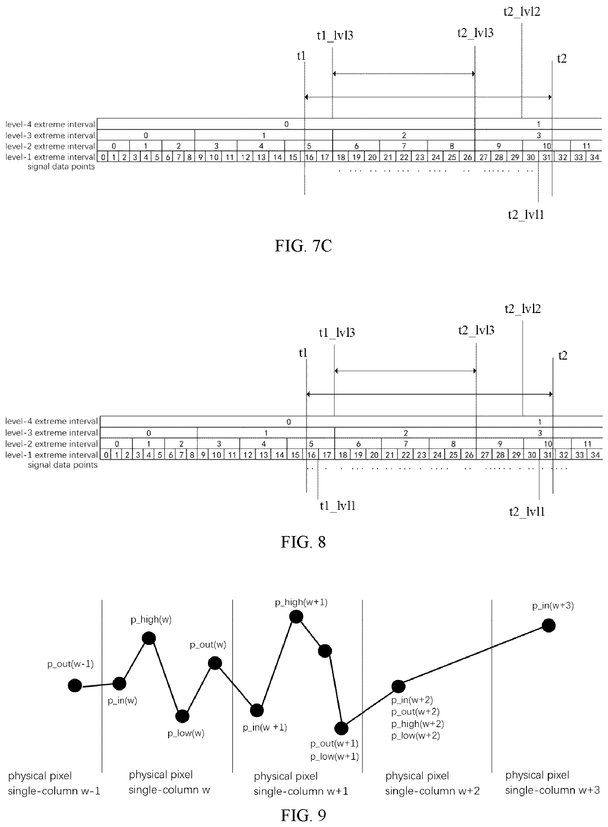

As shown in FIGS. 7A-7C, if there is no signal data points between the time *t*1_*lvl*3 and the first time *t*1, and there are signal data points between the time *t*2_*lvl*3 and the second time *t2,*
at step *S*21, downward traversal is performed from the level-3 extreme interval to the level-2 extreme interval, and it is found that one complete time period *lvl*2 of level-2 extreme interval (the time period corresponding to the number 9 in the level-2 extreme interval) is included between the time *t*2_*lvl*3 and the second time *t2;* Therefore, *j=2* and the traversal is ended. The number of times of the traversal is 3-2=1 times;
at step *S22,* the time sub-domain of the time period *lvl*2 is defined as time *t*2_*lvl*3 to time *t*2_*lvl*2, and the minimum value *y*2_*low* and the maximum value *y* 2_*high* in the time period *lvl*2 are obtained;
at step *S*23, whether there are signal data points between the time *t*2_*lvl*2 and the second time *t*2 is determined;
at step *S*24, if the determination result of the step *S*23 is no, as shown in FIG. 7A, the minimum observation value *y*_*low* is the minimum value of *y*3_*low* and *y*2_*low,* and the maximum observation value *y*_*high* is the maximum value of *y*3_*high* and *y*2_*high*; if the determination result of the step *S*23 is yes, as shown in FIG. 7B,
the steps S21 to S23 are iterated until the lowest-level extreme interval *lvl*1 is obtained, and it is determined whether there are signal data points between the time *t*2_*lvl*1 and the second time *t*2;
at step *S*25, in this example, the steps S21 to S23 are iterated to the time period *lvl*1 of level-1 extreme interval (the time period corresponding to the number 30 in the level-1 extreme interval; the time sub-domain the 30-numbered time period is time *t*2*_lvl*2 and time *t*2_*lvl*1; in order to distinguish from the example, the minimum value is obtained as *y*30_*low* and the maximum value is obtained as *y*30_*high* in the 30-numbered time period); if there is no signal data point between the time *t*2_*lvl*1 and the second time *t2,* as shown in FIG. 7C, the minimum observation value *y*_*low* is the minimum value of *y*3_*low, y2*_*low* and *y*30_*low*; the maximum observation value *y*_*high* is the maximum value of *y*3_*high, y*2_*high* and *y*30_*high*; if there are signal data points between the time *t*2_*lvl*1 and the second time *t2,* as shown in FIG. 7B, the minimum observation value *y*_*low* is the minimum value of *y*3_*low, y2*_*low, y*30_*low, and* the minimum value of all signal data points between the time *t*2_*lvl*1 and the second time *t2,* and the maximum observation value *y*_*high* is the maximum value of *y*3_*high, y*2_*high, y*30_*high* and the maximum value of all signal data points between the time *t*2_*lvl*1 and the second time *t2.*

### Fourth circumstance

As shown in FIG. 8, if the termination result is that there are signal data points between the time *t*1_*lvl*3 and the first time *t*1, and that there are signal data points between the time *t*2_*lvl*3 and the second time *t2,*
the minimum observation value *y*_*low* is the smaller value of the minimum observation values in the second and third circumstances;
the maximum observation value *y*_*high* is the greater value of the maximum observation values in the second and third circumstances.

As shown in FIG. 9, the signal ingress point *p*_*in (w)* in the individual column of physical pixels *w* is configured to be connected with the signal egress point *p*_*out* (*w*-1) in the previous neighboring individual column of physical pixels *w*-1; the highest point of signal value *p*_*high* (*w*) in the individual column of physical pixels w is configured to be connected with the lowest point of signal value *p*_*low* (*w*) in the individual column of physical pixels w; the signal ingress point *p*_*in* (*w+*1) in the individual column of physical pixels *w*+1 is configured to be connected with the signal egress point *p*_*out* (*w*) in the previous neighboring individual column of physical pixels (*w*); the highest point of signal value *p_high* (*w+*1) in the individual column of physical pixels *w*+1 is configured to be connected with the lowest point of signal value *p*_*low* (*w+*1) in the individual column of physical pixels *w*+1. By analogy, the graphics of various signal data points can be finally drawn. Furthermore, as shown in FIG. 9, there may be one or more signal data points between the highest point of signal value p_high(*w*+1) and the lowest point of signal value p_low(*w*+1). But in the present disclosure, other points than the above four signal data points (the signal ingress point, the signal egress point, the highest point of signal value and the lowest point of signal value) can be neglected.

It should be noted that if there is no signal data point in the previous neighboring individual column of physical pixels w-1 of the individual column of physical pixels *w*, the signal ingress point *p*_*in* (*w*) in the individual column of physical pixels w should be connected with the signal egress point *p*_*out* (*w-*2) in the previous previous individual column of physical pixels *w*-2.

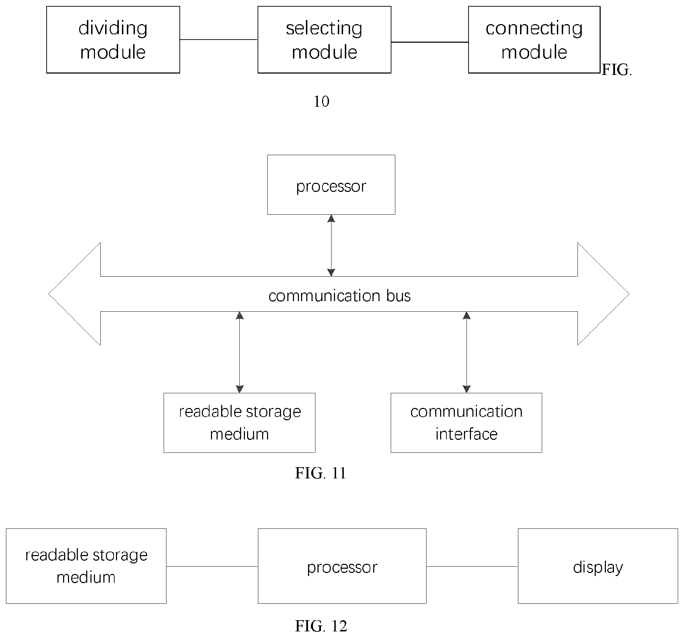

As shown in FIG. 10, some embodiments further provide a graphics drawing system, which includes a computer device. The computer device is configured to include:
a dividing module, configured to, divide a drawing area into at least one individual column of physical pixels according to physical horizontal pixels;
a selecting module, configured to: for each individual column of physical pixels, select corresponding signal data points as a signal ingress point *p*_*in,* a signal egress point *p*_*out, a* highest point of signal value *p*_*high* and a lowest point of signal value *p*_*low* from all signal data points for graphics drawing in the individual column of physical pixels; and,
a connecting module, configured to configure the signal ingress point *p*_*in* to be connected with a signal egress point *p*_*out* in a previous neighboring individual column of physical pixels, and configure the highest point of signal value *p*_*high* to be connected with the lowest point of signal value *p*_*low* in the same individual column of physical pixels.

The specific implementation functions of the dividing module, the selecting module and the connecting module are implemented in the computer device, which can be referred to the contents of the above graphics drawing method and will not be repeated herein.

From the hardware level, the electronic device in the embodiments of the present disclosure will be described below.

The embodiments of the present disclosure do not constitute any limitation to the specific implementation of the electronic device.

As shown in FIG. 11, some embodiments further provide an electronic device, which includes a processor, a readable storage medium, a communication bus and a communication interface. Mutual communication is carried out among the processor, the readable storage medium and the communication interface by the communication bus. The readable storage medium is configured to store programs for executing the graphics drawing method, and the programs cause the processor to perform the steps corresponding to the graphics drawing method.

As shown in FIG. 12, some embodiments further provide an electronic device, which includes:
a processor, a display communicating with the processor to present a graphics interface, and a readable storage medium.

The readable storage medium is configured to store instruction programs;
the processor is configured to execute the instruction programs to perform the operations of:
dividing a drawing area into at least one individual column of physical pixels according to physical horizontal pixels;
for each individual column of physical pixels, selecting corresponding signal data points as a signal ingress point *p*_*in,* a signal egress point *p*_*out,* a highest point of signal value *p_high* and a lowest point of signal value *p*_*low* from all signal data points for graphics drawing in the individual column of physical pixels; and,
configuring the signal ingress point *p*_*in* to be connected with a signal egress point *p*_*out* in a previous neighboring individual column of physical pixels, and configuring the highest point of signal value *p*_*high* to be connected with the lowest point of signal value *p*_*low* in the same individual column of physical pixels;
the display is configured to display the drawn graphics by the graphics interface.

The processor executes the programs to perform the steps in the embodiments of the graphics drawing method shown in FIG. 1, for example, in the step diagram of FIG. 1. Alternatively, the processor executes computer programs to implement the functions of each module or unit in each apparatus embodiment mentioned above.

In some embodiments, the computer device and the industrial personal computer may also be used as one of the electronic devices.

The structures shown in FIGS. 11-12 do not constitute any limitation to the electronic device, and the electronic device may further include more or less components than shown in the drawings or combine some components or have different component deployments.

In some embodiments, the communication interface may be RS232, RS485, USB interface or TYPE interface or the like, which may be connected with an external bus adapter. The communication interface may also include wired or wireless network interface. The network interface may optionally include wired interface and/or wireless interface (such as WI-FI interface, Bluetooth interface and the like), which is usually used to establish communication connection between the server and other computer devices.

The readable storage medium or the computer readable storage medium includes at least one type of memories. The memory includes flash memory, harddisk drive, multimedia card, card type memory (e.g. SD memory or the like), magnetic memory, magnetic disk or compact disk or the like. In some embodiments, the memory may be an internal storage unit in the computer device, for example, a harddisk drive of the computer device. In some other embodiments, the memory may also be an external storage device of the computer device, for example, a plug type hard disk drive, a smart media card (SMC), a secure digital (SD) card, a flash card or the like on the computer device. Furthermore, the memory may include both the internal storage unit in the computer device and the external storage device. The memory may be used to not only store an application software installed on the computer device and various types of data, for example, the codes of the computer program and the like but also temporarily store data already output or to be output.

In some embodiments, the processor may be a central processing unit (CPU), a processor, a controller, a microcontroller, a microprocessor or another data processing chip, which is used to run the program codes in the memory or process the data, for example, execute the computer program or the like.

In some embodiments, the communication bus may also be an input/output bus, which may be a Peripheral Component Interconnect (PCI) bus, or an Enhanced Industry Standard Architecture (EISA) bus or the like. The bus may include an address bus, a data bus and a control bus and the like.

Optionally, the computer device may also include a user interface, which may include a display, and an input unit, for example, a keyboard. Optionally, the user interface may also include a standard wired interface and wireless interface. Optionally, in some embodiments, the display may be an LED display, a liquid crystal display, a touch liquid crystal display and an Organic Light-Emitting Diode (OLED) touch display and the like. The display may also be appropriately referred to as display screen or display unit for displaying information processed in the computer device as well as a visual user interface.

Some embodiments further provide a computer readable storage medium configured to store any one of the possible graphics drawing methods.

Some embodiments further provide a computer readable storage medium, storing computer readable instructions. The computer readable instructions are executed by at least one processor to perform the above graphics drawing method, which specifically includes:
dividing a drawing area into at least one individual column of physical pixels according to physical horizontal pixels;
for each individual column of physical pixels, selecting corresponding signal data points as a signal ingress point *p_in,* a signal egress point *p*_*out,* a highest point of signal value *p_high* and a lowest point of signal value *p*_*low* from all signal data points for graphics drawing in the individual column of physical pixels; and,
configuring the signal ingress point *p*_*in* to be connected with a signal egress point *p*_*out* in a previous neighboring individual column of physical pixels, and configuring the highest point of signal value *p*_*high* to be connected with the lowest point of signal value *p*_*low* in the same individual column of physical pixels.

Reference can be made to the specific descriptions of the graphics drawing method and no redundant descriptions are made herein.

Some embodiments further provide a computer program product which includes computer programs or instructions. The computer programs or instructions are executed on a computer to cause the computer to perform any one of the above possible graphics drawing methods.

Some embodiments further provide a computer program product, which includes a computer readable storage medium storing computer readable program codes. The computer readable program codes include instructions which cause at least one processor or one or more computer devices to perform the operations of:
dividing a drawing area into at least one individual column of physical pixels according to physical horizontal pixels;
for each individual column of physical pixels, selecting corresponding signal data points as a signal ingress point *p*_*in,* a signal egress point *p*_*out,* a highest point of signal value *p_high* and a lowest point of signal value *p*_*low* from all signal data points for graphics drawing in the individual column of physical pixels; and,
configuring the signal ingress point *p*_*in* to be connected with a signal egress point *p*_*out* in a previous neighboring individual column of physical pixels, and configuring the highest point of signal value *p*_*high* to be connected with the lowest point of signal value *p*_*low* in the same individual column of physical pixels.

In the several embodiments provided by the present disclosure, it should be understood that the disclosed device and method can be implemented another way. The above device embodiments are merely illustrative, for example, the flowcharts or block diagrams in the drawings show possible system architectures, functions and operations of the device, method, and computer program product in the several embodiments provided by the present disclosure. Thus, each block in the flowcharts or block diagrams may represent one module, one program fragment or one part of codes. The module, the program fragment or the part of codes includes one or more executable instructions for implementing the specified logic functions. It should be noted that in some alternative embodiments, the functions indicated in the blocks may also be performed in a sequence different from that indicated in the drawings. For example, two continuous blocks can be actually performed basically in parallel, and sometimes may be performed in a reverse sequence, which is dependent on the functions involved. It is further noted that each block in the block diagrams and/or flowcharts and the combinations of the blocks in the block diagrams and/or flowcharts may be implemented by a dedicated hardware-based system for executing specified functions or actions, or by combination of dedicated hardware and computer instructions.

Furthermore, the functional modules in the embodiments of the present disclosure can be integrated into one independent part, or exist as separate modules or two or more of the modules are integrated into one independent part.

The functions, when implemented by software function modules and sold or used as independent products, can be stored in one computer readable storage medium. Based on such understanding, the essence of technical solutions of the present disclosure, or a part contributing to the prior arts or a part of the technical solutions can be embodied in the form of software product. The computer software product is stored in one storage medium which includes several instructions to enable one computer device (for example, a personal computer, a server, or a network device or the like) to perform all or part of the steps of the method of each of the embodiments of the present disclosure.

Enlightened by the ideal embodiments of the present disclosure, relevant workers can, based on the contents of the specification, make various changes and modifications within the scope of protection of the technical idea of the present disclosure. The technical scope of the present disclosure is not limited to the contents of the specification but to the technical scope claimed by the claims.

## Claims

1. A graphics drawing method, comprising:
dividing a drawing area into at least one individual column of physical pixels according to physical horizontal pixels;
for each individual column of physical pixels, selecting corresponding signal data points as a signal ingress point, a signal egress point, a highest point of signal value and a lowest point of signal value from all signal data points for graphics drawing in the individual column of physical pixels; and
configuring the signal ingress point to be connected with a signal egress point in a previous neighboring individual column of physical pixels, and configuring the highest point of signal value to be connected with the lowest point of signal value in a same individual column of physical pixels.

2. The graphics drawing method according to claim 1, wherein
a method of selecting the corresponding signal data points as the highest point of signal value and the lowest point of signal value comprises:
defining a graphics-displayed time span in each individual column of physical pixels from a first time t1 to a second time t2;
obtaining a maximum observation value from all signal data points between the first time *t*1 and the second time t2 to take the signal data point corresponding to the maximum observation value as the highest point of signal value; and
obtaining a minimum observation value from all signal data points between the first time *t*1 and the second time *t*2 to take the signal data point corresponding to the minimum observation value as the lowest point of signal value.

3. The graphics drawing method according to claim 2, wherein
a method of obtaining the minimum observation value and the maximum observation value comprises:
constructing collected signal data points into *n* levels of extreme intervals, wherein *n* is a level number of the extreme interval and *n*≥1;
performing a downward level-by-level traversal from a highest level-*n* extreme interval to a level*-m* extreme interval, such that at least one complete time period in the level-*m* extreme interval is comprised between the first time *t*1 and the second time *t2,* wherein *m* is a level number of the extreme interval and 1≤*m*≤*n*; and
combining the level-m extreme interval with an extreme interval dual-side comparison method to obtain the minimum observation value and the maximum observation value.

4. The graphics drawing method according to claim 3, wherein
a method of combining the level-*m* extreme interval with the extreme interval dual-side comparison method to obtain the minimum observation value and the maximum observation value comprises:
defining a time sub-domain of all complete time periods comprised in the level-m extreme interval as a time *t*1_*lvlm* to a time *t*2_*lvlm*;
determining whether signal data points are present between the time *t*1_*lvlm* and the first time *t*1 and between the time *t*2_*lvlm* and the second time *t2* and obtaining a determination result; and
combining with the determination result, a minimum value and a maximum value of all complete time periods comprised in the level-*m* extreme interval to obtain the minimum observation value and the maximum observation value.

5. The graphics drawing method according to claim 4, wherein
a method of combining with the determination result, the minimum value and the maximum value of all complete time periods comprised in the level-*m* extreme interval to obtain the minimum observation value and the maximum observation value comprises:
when the determination result is that there is no signal data point between the time *t*1_*lvlm* and the first time t1 and between the time *t*2_*lvlm* and the second time *t2,* determining the minimum observation value is equal to the minimum value of all complete time periods comprised in the level-m extreme interval, and that the maximum observation value is equal to the maximum value of all complete time periods comprised in the level-m extreme interval.

6. The graphics drawing method according to claim 4, wherein
a method of combining with the determination result, the minimum value and the maximum value of all complete time periods comprised in the level-m extreme interval to obtain the minimum observation value and the maximum observation value comprises:
when the determination result is that there are the signal data points between the time *t*1_*lvlm* and the first time *t*1 and that there is no signal data point between the time *t*2_*lvlm* and the second time *t*2,
at a step *S*11, performing the downward level-by-level traversal from a level-(*m*-1) extreme interval to a level-*r* extreme interval, such that at least one complete time period in the level*-r* extreme interval is comprised between the time *t*1_*lvlm* and the first time *t*1;
at a step *S*12, defining a time sub-domain of all complete time periods comprised in the level-r extreme interval as a time *t*1_*l*v*lr* to the time *t*1*_lvlm*;
at a step *S*13, determining whether there are the signal data points between the time *t*1_*lvlr* and the first time *t*1;
at a step *S*14, when a termination result of the step *S*13 is no, determining that the minimum observation value is equal to a minimum value of the minimum value of all complete time periods comprised in the level-*m* extreme interval and a minimum value of all complete time periods comprised in the level-*r* extreme interval, and that the maximum observation value is equal to a maximum value of the maximum value of all complete time periods comprised in the level-*m* extreme interval and a maximum value of all complete time periods comprised in the level-*r* extreme interval; when the termination result of the step *S*13 is yes, iterating the step *S*11 to the step *S*13 until a level-1 extreme interval is obtained and determining whether there are the signal data points between a time *t*1_*lvl*1 and the first time *t*1; and
at a step *S*15, when a determination result of determining whether there are the signal data points between the time *t*1_*lvl*1 and the first time *t*1 in the step *S*14 is no, determining that the minimum observation value is equal to a minimum value of minimum values of all complete time periods comprised in extreme intervals of the level-*m* extreme interval to the level-1 extreme interval, and that the maximum observation value is equal to a maximum value of maximum values of all complete time periods comprised in the extreme intervals of the level-*m* extreme interval to the level-1 extreme interval; when the determination result of determining whether there are the signal data points between the time *t*1_*lvl*1 and the first time *t*1 in the step *S*14 is yes, determining that the minimum observation value is equal to a minimum value of a minimum value of all complete time periods comprised in each extreme interval of the level-*m* extreme interval to the level-1 extreme interval and a minimum value of all signal data points between the time *t*1_*lvl*1 and the first time *t*1, and that the maximum observation value is equal to a maximum value of a maximum value of all complete time periods comprised in each extreme interval of the level-*m* extreme interval to the level-1 extreme interval and a maximum value of all signal data points between the time *t*1_*lvl*1 and the first time *t*1.

7. The graphics drawing method according to claim 4, wherein
a method of combining with the determination result, the minimum value and the maximum value of all complete time periods comprised in the level-*m* extreme interval to obtain the minimum observation value and the maximum observation value comprises:
when the determination result is that there is no signal data point between the time *t*1_*lvlm* and the first time *t*1 and that there are the signal data points between the time *t*2_*lvlm* and the second time *t*2,
at a step *S*21, performing the downward level-by-level traversal from a level-(*m*-1) extreme interval to a level-*j* extreme interval, such that at least one complete time period in the level-*j* extreme interval is comprised between the time *t*2_*lvlm* and the second time *t2;*
at a step *S*22, defining a time sub-domain of all complete time periods comprised in the level-*j* extreme interval as the time *t*2_*lvlm* to a time *t2_lvlj*;
at a step *S*23, determining whether there are the signal data points between the time *t*2_*lvlj* and the second time *t*2;
at a step *S*24, when a termination result of the step *S*23 is no, determining that the minimum observation value is equal to a minimum value of the minimum value of all complete time periods comprised in the level-*m* extreme interval and a minimum value of all complete time periods comprised in the level-*j* extreme interval, and that the maximum observation value is equal to a maximum value of the maximum value of all complete time periods comprised in the level-*m* extreme interval and a maximum value of all complete time periods comprised in the level-*j* extreme interval; when the termination result of the step *S*23 is yes, iterating the step *S*21 to the step *S*23 until a level-1 extreme interval is obtained and determining whether there are the signal data points between a time *t*2_*lvl*1 and the second time *t2;* and
at a step *S*25, when a determination result of determining whether there are the signal data points between the time *t*2_*lvl*1 and the second time *t2* in the step *S*24 is no, determining that the minimum observation value is equal to a minimum value of minimum values of all complete time periods comprised in extreme intervals of the level-m extreme interval to the level-1 extreme interval, and that the maximum observation value is equal to a maximum value of maximum values of all complete time periods comprised in the extreme intervals of the level-*m* extreme interval to the level-1 extreme interval; when the determination result of determining whether there are the signal data points between the time *t*2_*lvl*1 and the second time *t*2 in the step *S*24 is yes, determining that the minimum observation value is equal to a minimum value of a minimum value of all complete time periods comprised in each extreme interval of the level-*m* extreme interval to the level-1 extreme interval and a minimum value of all signal data points between the time *t*2_*lvl*1 and the second time *t2,* and that the maximum observation value is equal to a maximum value of a maximum value of all complete time periods comprised in each extreme interval of the level-*m* extreme interval to the level-1 extreme interval and a maximum value of all signal data points between the time *t*2_*lvl*1 and the second time *t*2.

8. The graphics drawing method according to claim 4, wherein,
the method of combining with the determination result, the minimum value and the maximum value of all complete time periods comprised in the level-*m* extreme interval to obtain the minimum observation value and the maximum observation value comprises:
when the determination result is that there are the signal data points between the time *t*1_*lvlm* and the first time *t*1 and that there are the signal data points between the time *t*2_*lvlm* and the second time *t*2,
performing the step *S*11 to the step *S*15 to obtain a first group of minimum observation value and maximum observation value:
at a step *S*11, performing the downward level-by-level traversal from a level-(*m*-1) extreme interval to a level-*r* extreme interval, such that at least one complete time period in the level-*r* extreme interval is comprised between the time *t*1_*lvlm* and the first time *t*1;
at a step *S*12, defining a time sub-domain of all complete time periods comprised in the level-*r* extreme interval as a time *t*1_*lvlr* to the time *t*1_*lvlm*;
at a step *S*13, determining whether there are the signal data points between the time *t*1_*lvlr* and the first time *t*1;
at a step *S*14, when a termination result of the step *S*13 is no, determining that the minimum observation value is equal to a minimum value of the minimum value of all complete time periods comprised in the level-*m* extreme interval and a minimum value of all complete time periods comprised in the level-*r* extreme interval, and that the maximum observation value is equal to a maximum value of the maximum value of all complete time periods comprised in the level-m extreme interval and a maximum value of all complete time periods comprised in the level-r extreme interval; when the termination result of the step *S*13 is yes, iterating the step *S*11 to the step *S*13 until a level-1 extreme interval is obtained and determining whether there are the signal data points between a time *t*1_*lvl*1 and the first time *t*1; and
at a step *S*15, when a determination result of determining whether there are the signal data points between the time *t*1_*lvl*1 and the first time *t*1 in the step *S*14 is no, determining that the minimum observation value is equal to a minimum value of minimum values of all complete time periods comprised in extreme intervals of the level-*m* extreme interval to the level-1 extreme interval, and that the maximum observation value is equal to a maximum value of maximum values of all complete time periods comprised in the extreme intervals of the level-*m* extreme interval to the level-1 extreme interval; when the determination result of determining whether there are the signal data points between the time *t*1_*lvl*1 and the first time *t*1 in the step *S*14 is yes, determining that the minimum observation value is equal to a minimum value of a minimum value of all complete time periods comprised in each extreme interval of the level-*m* extreme interval to the level-1 extreme interval and a minimum value of all signal data points between the time *t*1_*lvl*1 and the first time *t*1, and that the maximum observation value is equal to a maximum value of a maximum value of all complete time periods comprised in each extreme interval of the level-*m* extreme interval to the level-1 extreme interval and a maximum value of all signal data points between the time *t*1_*lvl*1 and the first time *t*1;
performing the step *S*21 to the step *S*25 to obtain a second group of minimum observation value and maximum observation value:
at a step *S*21, performing the downward level-by-level traversal from a level-(*m*-1) extreme interval to a level-*j* extreme interval, such that at least one complete time period in the level-*j* extreme interval is comprised between the time *t*2_*lvlm* and the second time *t2;*
at a step *S*22, defining a time sub-domain of all complete time periods comprised in the level-*j* extreme interval as the time *t*2*_lvlm* to a time *t*2_*lvlj*;
at a step *S*23, determining whether there are the signal data points between the time *t*2_*lvlj* and the second time *t*2;
at a step *S*24, when a termination result of the step *S*23 is no, determining that the minimum observation value is equal to a minimum value of the minimum value of all complete time periods comprised in the level-*m* extreme interval and a minimum value of all complete time periods comprised in the level-*j* extreme interval, and that the maximum observation value is equal to a maximum value of the maximum value of all complete time periods comprised in the level-*m* extreme interval and a maximum value of all complete time periods comprised in the level-*j* extreme interval; when the termination result of the step *S*23 is yes, iterating the step *S*21 to the step *S*23 until a level-1 extreme interval is obtained and determining whether there are the signal data points between a time *t*2_*lvl*1 and the second time *t2;* and
at a step *S*25, when a determination result of determining whether there are the signal data points between the time *t*2_*lvl*1 and the second time *t2* in the step *S*24 is no, determining that the minimum observation value is equal to a minimum value of minimum values of all complete time periods comprised in extreme intervals of the level-*m* extreme interval to the level-1 extreme interval, and that the maximum observation value is equal to a maximum value of maximum values of all complete time periods comprised in the extreme intervals of the level-*m* extreme interval to the level-1 extreme interval; when the determination result of determining whether there are the signal data points between the time *t*2_*lvl*1 and the second time *t*2 in the step *S*24 is yes, determining that the minimum observation value is equal to a minimum value of a minimum value of all complete time periods comprised in each extreme interval of the level-*m* extreme interval to the level-1 extreme interval and a minimum value of all signal data points between the time *t*2_*lvl*1 and the second time *t2,* and that the maximum observation value is equal to a maximum value of a maximum value of all complete time periods comprised in each extreme interval of the level-m extreme interval to the level-1 extreme interval and a maximum value of all signal data points between the time *t*2_*lvl*1 and the second time *t*2;
obtaining a smaller value of two minimum observation values as a final minimum observation value; and
obtaining a greater value of two maximum observation values as a final maximum observation value.

9. A computer-readable storage medium, storing computer readable instructions, wherein the computer readable instructions are executed by at least one processor to perform the graphics drawing method according to any of claims 1-8.

10. An electronic device, comprising a processor, a readable storage medium, a communication bus and a communication interface, wherein a mutual communication among the processor, the readable storage medium and the communication interface is performed by the communication bus; and
the readable storage medium is configured to store programs for performing the graphics drawing method according to any of claims 1-8 and the programs cause the processor to perform operations corresponding to the graphics drawing method.

11. A computer program product, comprising computer programs or instructions, wherein the computer programs or the instructions are executed by a processor to perform steps of the graphics drawing method according to any of claims 1-8.

12. A graphics drawing system, comprising a computer device, wherein the computer device is configured to comprise:
a dividing module, configured to divide a drawing area into at least one individual column of physical pixels according to physical horizontal pixels;
a selecting module, configured to, for each individual column of physical pixels, select corresponding signal data points as a signal ingress point, a signal egress point, a highest point of signal value and a lowest point of signal value from all signal data points for graphics drawing in the individual column of physical pixels; and
a connecting module, configured to connect the signal ingress point with a signal egress point in a previous neighboring individual column of physical pixels, and connect the highest point of signal value with the lowest point of signal value in a same individual column of physical pixels.

13. The graphics drawing system according to claim 12, wherein
the selecting module is further configured to select the corresponding signal data points as the highest point of signal value with the lowest point of signal value, comprising:
defining a graphics-displayed time span in each individual column of physical pixels from a first time *t*1 to a second time *t*2;
obtaining a maximum observation value from all signal data points between the first time *t*1 and the second time *t*2 to take the signal data point corresponding to the maximum observation value as the highest point of signal value; and
obtaining a minimum observation value from all signal data points between the first time *t*1 and the second time *t*2 to take the signal data point corresponding to the minimum observation value as the lowest point of signal value.

14. The graphics drawing system according to claim 13, wherein
the selecting module is further configured to obtain the minimum observation value and the maximum observation value, comprising:
constructing collected signal data points into *n* levels of extreme intervals, wherein *n* is a level number of the extreme interval and *n*≥1;
performing a downward level-by-level traversal from a highest level-*n* extreme interval to a level-m extreme interval, such that at least one complete time period in the level-*m* extreme interval is comprised between the first time *t*1 and the second time *t2,* wherein *m* is a level number of the extreme interval and 1≤*m*≤*n*; and
combining the level-*m* extreme interval with an extreme interval dual-side comparison method to obtain the minimum observation value and the maximum observation value.

15. An electronic device, comprising a processor, a display communicating with the processor to present a graphics interface, and a readable storage medium, wherein
the readable storage medium is configured to store programs for performing the graphics drawing method according to any of claims 1-8 and the programs cause the processor to perform operations corresponding to the graphics drawing method; and
the display displays the drawing area.
